Europäisches Patentamt

(19) **European Patent Office**

Office européen des brevets

(11) Publication number: **0 000 266**
**B1**

(12) # EUROPEAN PATENT SPECIFICATION

(45) Date of publication of patent specification:
11.03.81

(51) Int. Cl.³: **B 29 H 17/16**

(21) Application number: **78300069.8**

(22) Date of filing: **22.06.78**

(54) **Fluid expandable tire building drum with shoe means attached thereto to form a tire building surface.**

(30) Priority: **05.07.77 US 813151**
**05.07.77 US 813153**

(43) Date of publication of application:
**10.01.79 Bulletin 79/1**

(45) Publication of the grant of the patent:
**11.03.81 Bulletin 81/10**

(84) Designated Contracting States:
**DE FR GB NL SE**

(56) References cited:
**DE-B-1 579 183**
**US-A-2 715 931**
**US-A-2 743 760**

(73) Proprietor: **NRM CORPORATION, P.O.**
**Box 6338 3200 Gilchrist Road, Akron, Ohio 44312 (US)**

(72) Inventor: **Collins, Marcus H., 4320 W. Bath Road, Akron, Ohio 44313 (US)**
Inventor: **Smith, John K., 3107 Commonwealth Drive, Parma, Ohio 44134 (US)**
Inventor: **Patel, Kiritkumar R., 8813 Falls Lane, Broadview Heights, Ohio 44147 (US)**

(74) Representative: **Rooney, Paul Blaise et al, D.Young & Co. 9 & 10 Staple Inn, London WC1V 7RD (GB)**

## Fluid Expandable Tire Building Drum with Shoe Means Attached Thereto to Form a Tire Building Surface

The present invention relates to a fluid expandable drum for building a tread and a radial tread ply band in a tire building machine and more particularly to a fluid expandable drum which includes support means positively affixed thereto for supporting a plurality of shoe elements which define an annular building surface which is movable in a radial direction with the support means upon expansion and contraction of the tube element. The shoe means is operable to decrease the diameter of the building surface upon contraction of the tube element without the need for auxiliary springs.

Fluid expandable drums for building tires are wellknown in the art. An example of known tire building machinery is disclosed in the Henley U.S. Patent No. 3 475 254; the Appleby, et al. U.S. Patent No. 3 784 437; the Iredell U.S. Patent No. 2 614 951 and the Frazier U.S. Patent No. 2 715 931. Also, machines such as the NRM Model R1016 Second Stage Radial Tire Building Machine have also been used in the art for the construction of tires.

Some known tire building machines generally utilize a tire building drum wherein a plurality of shoe means are utilized to form the tire building surface. The shoe means are biased outwardly in a radial direction upon expansion of a fluid expandable element. Spring means are provided to retract the shoes and decrease the diameter of the tire building surface upon contraction of the tube element. Such a construction is shown in Henley U.S. Patent No. 3 474 254 wherein the springs 160 are utilized to urge the gap shields 161 inwardly, in the Iredell U.S. Patent No. 2 614 951 wherein springs 22 urge the segments 6 in an inwardly direction, and in the Frazier U.S. Patent No. 2 715 931 wherein springs 39 urge drum shoes 20,21 radially inwardly of their exterior faces. The use of spring means to return the shoes and the building surface to their contracted position increases the cost, complexity and reliability of the known tire building mechanisms. Moreover, the use of such springs considerably increases the difficulties in replacing an expandable tube element in the tire building machine due to the fact that all of the spring means must be released before the tube element can be replaced.

The present invention provides a fluid expandable drum for building tires or tire components comprising a rotatable annular hub, an expandable annular tube element having an inner surface supported on the annular outer surface of said hub, support means secured to the outer annular peripheral surface of said tube element for radial movement therewith when said tube element is expanded and contracted, and a plurality of shoe means each connected to said support means for radial movement therewith, said shoe means forming, when said tube element is expanded, a substantially rigid circular surface for building tires or tire components thereon, characterized in that the support means includes a plurality of support blocks, one for each shoe bonded to or formed integrally with the outer peripheral surface of said tube element. The tube element is expanded to expand the diameter of the building surface to enable a tread and a radial tread ply band to be built thereon and retracted to decrease the diameter of the building surface to enable a built tread and a radial tread ply band to be removed therefrom.

Reference will now be made, by way of example, to the accompanying drawings, in which:

Fig. 1 is a cross-sectional view of the annular fluid expandable tube element of the present invention;

Fig. 2 is a cross-sectional view of the annular fluid expandable tube element of the present invention illustrating the annular support drum upon which the tube is supported and the shoe means for defining the building surface; and

Fig. 3 is a side view taken approximately along the lines 3-3 of Fig. 2 more fully illustrating the annular drum and tube element and including a fragmentary showing of the retainer ring.

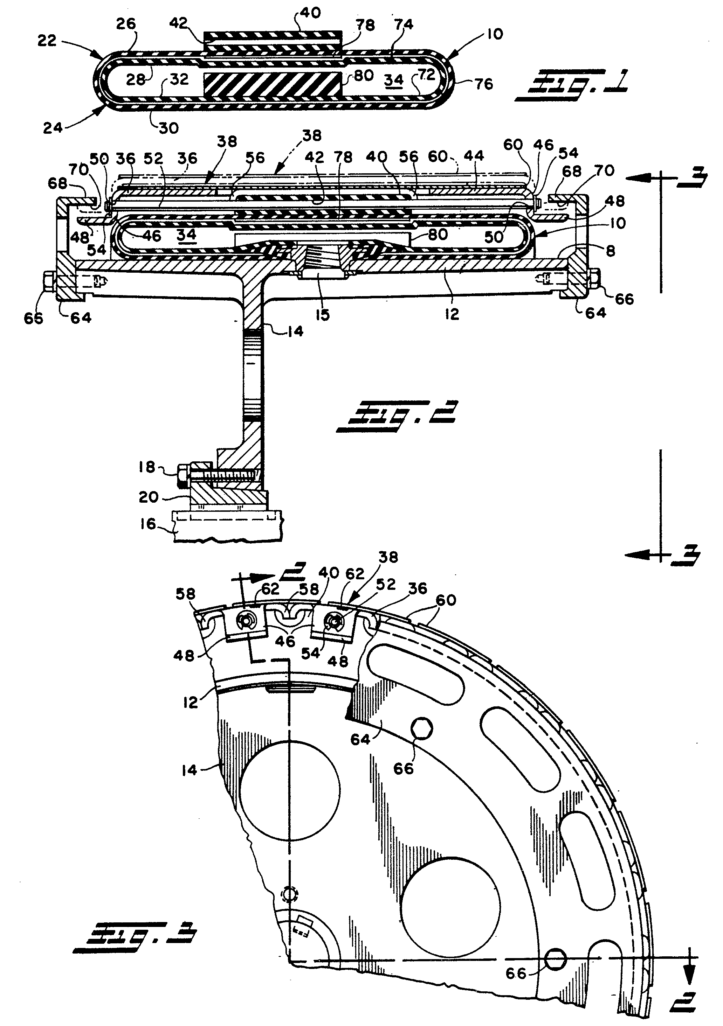

Referring to the Figures, an expandable tube element 10 for use in a tire building machine is illustrated. The tube element 10 is shown in Fig. 2 and 3 supported on the outer annular peripheral surface 8 of a tire building drum 12 which is normally supported in a tire building machine not illustrated. The tire building drum 12 includes a flange portion 14 which is secured to a shaft 16 for rotation therewith by a bolt 18 and tapered bushing 20. Suitable well-known means are provided in the tire building machine to effect rotation of shaft 16 and, hence, drum 12 to enable a tire portion, in the preferred embodiment a tread and a radial tread ply band, to be built thereon.

The tube element 10 includes an upper wall portion 22 and a lower wall portion 24. The upper wall portion 22 includes an outer peripheral surface 26 and an inner interior surface 28 and the lower wall portion 24 includes an outer peripheral surface 30 and an inner surface 32. The outer peripheral surface 30 of the lower wall portion 24 is adapted to be supported on the annular peripheral surface 8 of the drum 12 for rotation therewith. The tube element 10 has a contracted condition as is illustrated in full lines in Fig. 2 and an expanded condition, illustrated in phantom lines in Fig. 2 in which a fluid, such as air, is introduced through a valve 15 into the cavity 34 to effect radial movement of the upper wall portion 22 away from the drum 12 and lower wall portion 24.

Secured to the upper wall portion 22 are a plurality of shoe members 36 which in part define an annular tire building surface 38 upon which portions of tires are constructed. Expansion of the tube element 10 effects an increase in diameter of the annular tire building surface 38 and contraction of the tube element 10 effects a decrease in diameter of the tire building surface 38.

The outer peripheral surface 26 of the upper wall portion 22 includes a plurality of support blocks 40 which are bonded thereto or formed integrally therewith in an annular array. The support blocks 40 each include a cylindrical opening 42 disposed therein which enables a shoe member 36 to be attached thereto. It should be appreciated that each of the support blocks 40 has one shoe member 36 affixed thereto for movement therewith.

Each of the shoe members 36 include a planar portion 44 and a pair of side portions 46 which extend substantially perpendicular from the planar portion 44. A flange 48 extends from each of the side portions 46 in an outwardly direction. Each of the side portions 46 includes an opening 50 therein which is adapted to receive a rod member 52 therein. The rod member 52 extends through the openings 50 in the side portions 46 of the shoe 36 and passes through the opening 42 in the support block 40 to interconnect the shoe 36 and the support block 40. Suitable means, such as the C-clips 54, are provided to secure the rod 52, relative to the shoe 36 and support block 40, once rod 52 is passed through the openings 50 and 42. The rod 52 connects the shoe member 36 to the support block 40 disposed on the tube element 10 so that the shoe member 36 moves radially inwardly and outwardly upon contraction and expansion, respectively, of the tube element 10 without the need for auxiliary return springs.

Each of the shoe members 36 includes punched tabs 56 in the planar surface 44 which are disposed apart a distance equal to the width of the support block 40. The tabs 56 engage the upper corners of the support block 40 to center and support the shoe member 36 relative to the support block 40. As is more fully illustrated in Fig. 3, each of the shoe members 36 includes radially projecting side portions 58 at the edges thereof.

Secured to the planar surface 44 of each of the plurality of shoe members 36 is a gap plate 60. Each of the gap plates 60 is secured via a weld 62 to the surface 44 of a shoe member 36. It should be apparent from Fig. 3 that the gap plates 60 are not centrally located on the surface 44 of the shoe members 36. Rather, the gap plates are offset relative to the shoe members 36 so that the gap plates 60 extend across the gaps formed by the radially projecting side portions 58 of adjacent shoe membes 36. Upon expansion of the tube element 10, the shoe members 36 move in a radially outwardly direction causing the planar surface 44 of each of the shoe members 36 to move apart thereby accentuating the space or gap formed between the side portions 58 of adjacent shoe members 36. The plurality of planar surfaces 44 cooperate to define the annular building surface 38 upon which the tire portion is built and the gap plates 60 cooperate with the planar surfaces 44 to define a substantially continuous annular building surface 38 around the exterior of the drum 12. When the tube 10 is expanded, the shoe mem-

bers 36 move radially outwardly causing the gap plates 60 to slide in a tangential direction as the building surface 38 expands. The gap plates 60 are of sufficient length so that when the tube element 10 reaches its fully expanded condition, the gap plates still cover the gaps formed by the adjacent side portions 58 of the shoe members 36. The gap plates 60 form the building surface 38 upon which a portion of a tire is built. It should be apparent that the gap plates 60 and the planar surfaces 44 provide a substantially continuous annular building surface 38 about the periphery of the drum 12 when the tube element 10 is in its expanded and contracted condition.

In the present embodiment, the expandable drum 12, as illustrated in the figures, is utilized for building a tread and a radial tread ply band. The tread and radial tread ply band are utilized in producing radial tires and are subsequently combined with a tread portion and cured to form the tire. The plys of the tread and radial tread ply band are placed on the building surface 38 when the tube element 10 is in its expanded condition. This controls the size of the tread and radial tread ply band. After the tread and radial tread ply band have been completed, the tube element 10 is contracted thereby contracting the shoe members 36 and the building surface 38. Contraction of the building surface 38 causes the gap plates 60 to slide in a tangential direction over the planar surfaces 44 as the diameter of the building surface 38 decreases. The tangential movement of the gap plates 60 upon contraction of tube element 10 loosens the built tread and radial tread ply band from the building surface 38 so that it can be removed for a subsequent operation.

The diameter of the tread and radial tread ply band formed on the building surface 38 is extremely critical. Accordingly, a pair of annular retainer rings 64 are secured to the sides of the annular drum 12 via bolt members 66. The retainer rings 64 include an inwardly projecting flange member 68 which includes an interior surface 70. The surface 70 of each of the retainer rings 64 is adapted to engage with the flanges 48 disposed on either side of the shoe member 36 to limit the radial movement of the shoe member 36 upon expansion of the tube element 10 and fix the diameter of the building surface 38 when the tube element 10 is expanded. It should be apparent that various retainer rings 64 could be utilized to vary the size of the building surface to build various sized tread and radial tread ply bands. The retainer rings 64 are easily replaceable by removing the bolts 66.

The tube element 10, as is more fully illustrated in Fig. 1, includes a rubber inner tube 72 which is preferably formed from neoprene. Bonded to the outside of the rubber inner tube is a radial ply 74. Bonded to the radial ply 74 is a rubber cover 76 which is also preferably formed from neoprene. (Rubber and neoprene will be used interchangeably in the specification, and it is Applicants' intention that both of these terms be considered generic for rubber or rubber-like resilient coatings). Disposed between the cover 76 and the radial ply 74 adjacent the annular array of support blocks 40, is a radial or 0 angle ply band 78. The radial ply band 78 has an annular shape and extends around the circumferences of the tube element 10 beneath the support blocks 40. The radial ply band 78 differs from the radial ply 74 in that the radial ply band 78 is an annular band which only extends in the upper wall portion 22 adjacent the support blocks 40 while the radial ply 74 has a conventional construction and extends throughout the entire wall portion of the tube element. The radial ply band 78 provides resiliency and adds strength to the upper wall portion 22 of the tube element 10. The provision of the radial ply band 78 enables the tube element 10 to contract to its original position and, thus, move the shoe members 36 and the building surface 38 in a radially inwardly direction without the need for auxiliary springs due to the strength and resiliency added by the band 78.

The construction of the tube element 10 enables the tube to withstand a 30% circumferential strain which occurs upon expansion of the tube element 10 to various diameters as the retainer rings 64 are varied to enable the apparatus to be utilized to construct various sized tires. It should be appreciated that upon expansion of the tube element 10, the side portions thereof must be resilient to provide for a uniform expansion to various diameters of the tube while the tube must have enought strength to support the support blocks 40 and the shoe members 36 for movement therewith and while a tread and a radial tread ply is constructed on the building surface 38. Thus, the combination of the radial ply 74 for adding overall strength to the tube and the radial ply band 78 for adding strength and resiliency in the upper portion 22 of the tube element 10 is desirable. Such a construction provides the required strength in the building surface 38 while not making the tube so stiff that it would not withstand a 30% circumferential strain upon expansion. Additionally, a minimum durometer rubber is preferably used to reduce local stresses in the corners or sides of the tube element 10.

A filler block 80 is secured to the inner surface 32 of the lower portion 24 of the tube element 10. The filler block 80 is preferably made of rubber or neoprene and acts to stiffen the lower wall portion 24 of the tube element 10 and decrease the volume of fluid needed to be directed to the chamber 34 to effect expansion of the tube element 10. The filler block 80 acts like a rubber band in tension to hold the center of the lower wall portion 24 against the surface 8 of the drum 12. This prevents the tube 10 from rolling on the surface 8 upon expansion due to a slight nonsymmetrical construction of the tube 10 caused by manufacturing inaccuracies. The filler block 80 also prevents sagging of the upper wall portion 26 when it is disposed below the lower wall portion 24 by adding rigidity to the lower wall portion 24. When the tube element 10 is placed on the annular drum 12, the lower half of the tube element, not illustrated, will have the shoe members 36 essentially hanging from the bottom portion of the annular tube member 10 and the lower wall portion 24 will be disposed vertically above the upper wall portion 26. If the filler block 80 were not provided, the weight of the shoe members 36 would cause the upper wall portion 26 of the lower half of the tube 10 to sag due to the weight of the shoe members 36 acting thereon which would also pull downwardly on the lower wall portion 24. This downward pull on the lower wall portion 24 would cause the lower wall portion 24 to sag if not for the force of the filler block 80 acting thereon in a direction tending to bias the tube to the surface 8 of drum 12. Thus, the filler block 80 acts to add rigidity to the lower wall portion 24 and prevent sagging of the upper wall portion 26 of the lower half of the tube 10. Additionally, the filler block 80 acts as a stop to limit the inward radial movement of the upper wall portion 26 to maintain substantial concentricity of the upper wall 26 relative to the surface 8 of drum 10.

From the foregoing, it should be apparent that a new and improved fluid expandable drum for building tread and radial tread ply bands in a tire building machine has been provided. The fluid expandable drum includes an outer surface 8 for supporting an expandable tube element 10 having an inner peripheral surface 30 supported on the annular outer surface 8 of the drum 12. Support blocks 40 are secured to the outer peripheral surface of the upper wall portion 26 of the tube element 10 and a plurality of shoe members 36 are connected to the support member 40 by the rods 52 for movement with the support blocks 40. The shoe members 36 define an annular building surface 38 which is movable in a radial direction relative to the drum 12 upon expansion and contraction of the tube element. The tube element includes a radial ply extending around the cross-sectional circumference of the tube element and a radial ply band extending around the outer peripheral surface adjacent the support blocks to increase the strength and resiliency of the outer peripheral surface to enable the shoe means to decrease the diameter of the building surface upon contraction of the tube element without the need for auxiliary springs.

A similar expandable carrier apparatus for a tire building machine is described and claimed in the present Applicants co-pending Patent Application No. 78 300 068.0

## Claims

1. A fluid expandable drum for building tires or tire components comprising a rotatable annular hub, an expandable annular tube element having an inner surface supported on the annular outer surface of said hub, support means secured to the outer annular peripheral surface of said tube element for radial movement therewith when said tube element is expanded and contracted, and a plurality of shoe means each connected to said support means for radial movement therewith, said shoe means forming, when said tube element is expanded, a substantially rigid circular surface for building tires or tire components thereon, characterized in that the support means includes a plurality of support blocks (40), one for each shoe (36) bonded to or formed integrally with the outer peripheral surface (26) of said tube element.

2. A drum as claimed in claim 1, wherein each shoe (36) is pin connected to a respective block (40), there being a hole (42) in each block extending axially of the drum and accommodating the pin (52) of the pin connection.

3. A drum as claimed in claim 1, including a radial or 0 angle ply band or belt (78) extending circumferentially around the outer peripheral surface of said tube element adjacent said support blocks (40).

4. A drum as claimed in any one of claims 1 to 3, wherein each shoe means (36) includes a pair of radially inwardly extending walls with said support means confined therebetween.

5. A drum as claimed in claim 1, including gauge rings (64) on each end of said hub (12) operative to engage and limit radial expansion of said shoe means (36).

6. A drum as claimed in claim 5, including a radially inwardly offset portion (48) on each axial end of each shoe means (36) operative to contact said gauge rings (64) as said shoe means are expanded by said tube element (10).

7. A drum as claimed in claim 6, including pin means (52) connecting said shoe means (36) to said support means, said pin means (52) extending through the radially inwardly extending portion (46) of each offset portion (48).

8. A drum as claimed in claim 7, wherein each shoe means (36) includes radially inwardly extending walls (56) closely confining said support means, said pin means (52) also extending through said walls (56) and said support means.

9. A drum as claimed in claim 1 including an annular fillter block (80) disposed symmetrically on the inner interior surface of said tube element (10).

**Revendications**

1. Tambour dilatable au fluide pour l'assemblage de pneumatiques ou composants de pneumatique, comprenant un moyeu annulaire rotatif, un élément tubulaire annulaire dilatable dont la surface intérieure est soutenue sur la face extérieure annulaire dudit moyeu, des moyens de support fixés à la surface périphérique annulaire extérieure dudit élément tubulaire pour se déplacer radialement avec elle quand ledit élément tubulaire se dilate et se contracte, et une série de patins reliés chacun à l'un desdits moyens de support pour en accompagner les mouvements radiaux, ces patins définissant, quand ledit élément tubulaire est dilaté, une surface circulaire sensiblement rigide sur laquelle on peut assembler des pneumatiques ou des composants de pneumatique, caractérisé en ce que lesdits moyens de support sont constitués par une série de blocs de support (40), prévus à raison d'un par patin (36), adhérant à la surface périphérique extérieure (26) dudit élément tubulaire ou réalisés d'un seul tenant avec elle.

2. Tambour selon la revendication 1, caractérisé en ce que chaque patin (36) est relié par une barrette ou goupille à un bloc (40) respectif, chaque bloc présentant un trou (42) dirigé suivant l'axe du tambour et qui reçoit la goupille (52) de raccordement.

3. Tambour selon la revendication 1, caractérisé en ce qu'il comporte un ruban ou ceinture de pli radial, ou à biais nul (78) qui s'étend circonférentiellement autour de la face périphérique extérieure dudit élément tubulaire en regard desdits blocs de support (40).

4. Tambour selon l'une quelconque des revendications 1 à 3, caractérisé en ce que chaque patin (36) comporte deux parois dirigées radialement vers l'intérieur entre lesquelles est confiné le moyen de support respectif.

5. Tambour selon la revendication 1, caractérisé en ce qu'il comporte, à raison d'un sur chaque extrémité dudit moyeu (12), des anneaux de calibrage (64) aptes à rencontrer lesdits patins (36) pour en limiter le mouvement radial d'expansion.

6. Tambour selon la revendication 5, caractérisé en ce qu'il est prévu, sur chaque extrémité axiale de chaque patin (36), une partie décalée vers l'intérieur (48) apte à rencontrer l'un desdits anneaux de calibrage (64) lors du mouvement d'expansion communiqué auxdits patins par ledit élément tubulaire (10).

7. Tambour selon la revendication 6, caractérisé en ce qu'il comporte des goupilles (52) dont chacune relie l'un desdits patins au moyen de support associé, ces goupilles (52) traversant la partie dirigée radialement vers l'intérieur (46) de chaque partie décalée (48).

8. Tambour selon la revendication 7, caractérisé en ce que chaque patin (36) comporte des parois dirigées radialement vers l'intérieur (56) qui confinent étroitement le moyen de support respectif, chacune desdites goupilles (52) traversant aussi ces parois (56) et ledit moyen de support respectif.

9. Tambour selon la revendication 1, caractérisé en ce qu'il comporte un bloc de remplissage annulaire (80) disposé symétriquement sur la face intérieure dudit élément tubulaire (10).

**Patentansprüche**

1. Durch ein Strömungsmedium expandierbare Trommel für den Bau von Reifen oder Reifenbestandteilen, mit einem drehbaren ringförmigen Nabenkörper, einem expandierbaren ringförmigen Schlauchelement, das mit einer inneren Oberfläche auf der ringförmigen äusseren Oberfläche des Nabenkörpers abgestützt ist, sowie mit an der äusseren ringförmigen Umfangsfläche des Schlauchelementes zusammen mit diesem bei dessen Expandieren und Zusammenziehen radial beweglichen Stützmitteln sowie einer Mehrzahl von Schuhstücken, von denen jedes zwecks radialer Bewegung damit mit den Stützmitteln verbunden ist, wobei die Schuhstücke in der expandierten Stellung des Schlauchelementes eine im wesentlichen starre kreisförmige Oberfläche für den Bau von Reifen oder Reifenbestandteilen darauf bilden, dadurch gekennzeichnet, dass die Stützmittel eine Mehrzahl von Stützblocks (40) beinhalten, und zwar einen Stützblock für jedes Schuhstück (36), und die Stützblocks (40) mit der äusseren Umfangsfläche (26) des Schlauchelementes verbunden oder integral daran angeformt sind.

2. Trommel nach Anspruch 1, dadurch gekennzeichnet, das jedes Schuhstück (36) mit einem entsprechenen Stützblock (40) verbolzt ist und in jedem Stützblock ein axial zur Trommel verlaufendes Loch (42) zur Aufnahme des Bolzens (52) der Bolzenverbindung vorgesehen ist.

3. Trommel nach Anspruch 1, dadurch gekennzeichnet, dass sich umfänglich um die äussere Umfangsfläche des Schlauchelementes herum benachbart zu den Stützblocks (40) ein radiales Schichtgürtelband (78) erstreckt.

4. Trommel nach einem der Ansprüche 1 bis 3, dadurch gekennzeichnet, dass jedes der Schuhstücke (36) ein Paar von radial sich nach innen erstreckenden Wänden beinhaltet, die die genannten Stützmittel zwischen sich einschliessen.

5. Trommel nach Anspruch 1, dadurch gekennzeichnet, dass an jedem Ende des Nabenkörpers (12) Begrenzungsringe (64) vorgesehen sind, mit denen die radiale Expansion der Schuhstücke (36) begrenzbar ist.

6. Trommel nach Anspruch 5, dadurch gekennzeichnet, dass an jedem axialen Ende eines jeden Schuhstückes (60) radial nach innen versetzte Abschnitte (48) vorgesehen sind, die bei der Expansionsbewegung der Schuhstücke vermittels des Schlauchelementes (10) gegen die Begrenzungsringe (64) laufen.

7. Trommel nach Anspruch 6, dadurch gekennzeichnet, dass Bolzen (52) vorgesehen sind, die die Schuhstücke (36) mit den Stützmitteln verbinden, wobei sich die Bolzen (52) durch den radial nach innen verlaufenden Abschnitt (46) eines jeden abgesetzten Abschnittes (48) erstrecken.

8. Trommel nach Anspruch 7, dadurch gekennzeichnet, dass jedes Schuhstück (36) radial nach innen sich erstreckende Wände (56) aufweist, die die Stützmittel eng umschliessen, wobei sich die Bolzen (52) auch durch diese Wände (56) und die Stützmitel erstrecken.

9. Trommel nach Anspruch 1, dadurch gekennzeichnet, dass auf der inneren Innenfläche des Schlauchelementes (10) symmetrisch ein ringförmiger Füllblock (80) angeordnet ist.

Fig. 1

Fig. 2

Fig. 3